# EUROPÄISCHE PATENTSCHRIFT

(11) **EP 3 328 685 B1**
(45) Veröffentlichungstag und Bekanntmachung des Hinweises auf die Patenterteilung: **28.08.2019**
(21) Anmeldenummer: 16759667.5
(22) Anmeldetag: 27.07.2016
(51) Int. Cl.: B60Q 1/08

(54) **EINSTELLSYSTEM FÜR EINE FAHRZEUGBELEUCHTUNGSVORRICHTUNG UND VERFAHREN ZUM BETREIBEN EINES SOLCHEN EINSTELLSYSTEMS**
ADJUSTING SYSTEM FOR A VEHICLE LIGHTING APPARATUS, AND METHOD FOR OPERATING SUCH AN ADJUSTING SYSTEM
SYSTÈME DE RÉGLAGE POUR DISPOSITIF D'ÉCLAIRAGE DE VÉHICULE ET PROCÉDÉ DE FONCTIONNEMENT D'UN TEL SYSTÈME DE RÉGLAGE

(30) Priorität: 31.07.2015 AT 506912015
(43) Veröffentlichungstag der Anmeldung: 06.06.2018
(73) Patentinhaber: ZKW Group GmbH, 3250 Wieselburg (AT)
(72) Erfinder: REINPRECHT, Markus, 3384 Pielachhäuser (AT)
(74) Vertreter: Patentanwaltskanzlei Matschnig & Forsthuber OG
(86) Internationale Anmeldenummer: PCT/AT2016/060021
(87) Internationale Veröffentlichungsnummer: WO 2017/020056

(56) Entgegenhaltungen:
- EP-A2- 1 433 655
- DE-A1- 10 163 004
- DE-A1- 10 338 756
- DE-A1-102009 015 824
- KR-A- 20130 104 330
- US-A1- 2005 111 231

## Beschreibung

Die Erfindung betrifft ein Einstellsystem für eine Beleuchtungsvorrichtung für Fahrzeuge, welche Beleuchtungsvorrichtung dazu eingerichtet ist, Licht zur Bildung zumindest einer durch einen Parametersatz beschriebenen Lichtverteilung in einen Bereich vor der Beleuchtungsvorrichtung abzustrahlen, wobei das Einstellsystem zum Modifizieren der zumindest einen durch den Parametersatz beschriebenen (unmodifizierten) Lichtverteilung eingerichtet ist, und wobei das Einstellsystem umfasst ein Lichtsteuergerät, in welchem Lichtsteuergerät der die Lichtverteilung beschreibende Parametersatz gespeichert ist, und welches Lichtsteuergerät der Beleuchtungsvorrichtung zugeordnet ist und dazu eingerichtet ist, die Beleuchtungsvorrichtung derart zu steuern, dass die Beleuchtungsvorrichtung Licht zur Bildung der zumindest einen Lichtverteilung gemäß dem Parametersatz in einen Bereich vor der Beleuchtungsvorrichtung abzustrahlen.

Die Erfindung betrifft weiters ein Verfahren zum Betreiben zumindest eines Einstellsystems für eine Beleuchtungsvorrichtung für Fahrzeuge, welche Beleuchtungsvorrichtung dazu eingerichtet ist, Licht zur Bildung zumindest einer durch einen Parametersatzbeschriebenen, vorzugsweise dynamischen, Lichtverteilung in einen Bereich vor der Beleuchtungsvorrichtung abzustrahlen, wobei das Einstellsystem zum Modifizieren der zumindest einen durch den Parametersatz beschriebenen Lichtverteilung eingerichtet ist, und wobei das Einstellsystem umfasst ein Lichtsteuergerät, in welchem Lichtsteuergerät der die Lichtverteilung beschreibende Parametersatz gespeichert ist, und welches Lichtsteuergerät der Beleuchtungsvorrichtung zugeordnet ist und dazu eingerichtet ist, die Beleuchtungsvorrichtung derart zu steuern, dass die Beleuchtungsvorrichtung Licht zur Bildung der zumindest einen Lichtverteilung gemäß dem Parametersatz in einen Bereich vor der Beleuchtungsvorrichtung abzustrahlen.

Durch eine große geografische Vielfalt der Gebiete, in denen Fahrzeuge eingesetzt werden und durch ebenso hohe Vielfältigkeit an Fahrstilen der Fahrer ist eine Notwendigkeit entstanden, die Fahrzeugbeleuchtung auf geografische Aspekte der Fahrzeugeinsatzgebiete und auf individuelle Bedürfnisse der Fahrzeugbenutzer anpassen zu können. So ist es in flachen Landschaften eher von Vorteil, in der Mitte (HV-Punkt) konzentrierte Lichtverteilungen zu verwenden, da man hier meist sehr lange gerade Fahrstrecken vorfindet. Für andere Fahrzeugbenutzer ist eine breitere Lichtverteilung vorteilhaft, da sie auf kurvigen Strecken eine bessere Ausleuchtung der Straße bietet und weiter in die Kurve gesehen werden kann.

Vorrichtungen zur Einstellung und/oder Modifizierung der von einer Beleuchtungsvorrichtung eines Fahrzeugs abgestrahlten Lichtverteilung durch den Fahrzeugbenutzer sind aus dem Patentschrifttum bekannt.

So z.B. zeigt EP 1433655 A2 eine digitale Beleuchtungsvorrichtung und Verfahren zur ihrer Steuerung offen. Unter anderem zeigt europäische Patentanmeldung ein Speichermedium, auf dem digitale Daten gespeichert werden und einen Controller, der gemäß einer vorgegebenen Lichtverteilung spezielle Daten auswählt. Dabei wird die Lichtverteilung durch benutzerseitige Eingaben vorgegeben. Diese Benutzerseitige Eingaben werden in EP 1433655 A2 durch eine Lichtverteilungsmuster-Auswahleinheit (*the light distribution pattern selection unit*) vorgenommen. Die Lichtverteilungsmuster-Auswahleinheit erlaubt dem Benutzer ein Lichtverteilungsmuster auszuwählen oder diese mittels in der Lichtverteilungsmuster-Auswahleinheit vorgesehenen Datenänderungsgeräts teilweise zu ändern. Ein Nachteil dabei ist, dass sich der Benutzer direkt am Kraftfahrzeug sein muss, während die Änderungen an den Lichtverteilungen vorgenommen werden.

Darüber hinaus zeigen: die deutsche Patentanmeldung DE 102009015824 A1 ein Blendfreikartenbereich-Kartenprodukt für AFS-Systeme; die US Patentanmeldung US2005/111231 A1) ein Lichtsteuergerät (*light controller*), welches sich auch zum Steuern der Frontscheinwerfer eignet, allerdings ohne eine Bedieneinheit bedient wird; die deutsche Patentanmeldung DE 10338756 A1 ein System zur Erzeugung einer Lichtverteilung, die beim Verlassen des Fahrzeugs aktiviert wird, und die deutsche Patentanmeldung DE 10163004 A1 eine Steuerung der Lichtverteilung anhand gesammelter GPS Daten.

Des Weiteren ist der Gegenstand der Anmeldung WO 2013/118929 A1 ein variabel konfigurierbares Bremslichtsteuersystem unter Benutzung eines Benutzerendgeräts und ein Verfahren zur Steuerung dieses Systems. Nachteilig dabei ist, dass sich die in diesem Dokument offenbarte technische Lehre nur auf Bremslichter mit LED Anordnungen bezieht. Die Figuren legen zwar nahe, dass die erzeugten Lichtmuster am Benutzerendgerät im Prinzip angezeigt werden können, thematisiert aber auf keiner Weise eine Darstellung von insbesondere dynamischen, gesetzlichen Normen entsprechenden Lichtverteilungen, welche von Beleuchtungseinrichtungen im Fahrzeugfrontbereich, beispielsweise von Frontscheinwerfern, erzeugt werden.

In der Gebrauchsmusterschrift DE 20 2015 001 183 U1 werden frei programmierbare Rückleuchten an Kraftfahrzeugen beschrieben. In der Beschreibung wird auf die für die Bundesrepublik Deutschland spezifischen lichttechnischen Prüfeinrichtungen (Technischer Überwachungsverein TÜV, Deutscher Kraftfahrzeug-Überwachungs-Verein e.V. DEKRA) eingegangen, nicht aber auf die den Prüfungen zugrundeliegenden gesetzlichen Normen. Es wird auch die Nutzung der Erfindung für Frontbeleuchtungen unter der Bedingung der technischen Realisierbarkeit erwähnt, vermittelt aber dem Fachmann keine ausreichende technische Lehre, um eine solche Vorrichtung für die Frontbeleuchtungssystemen unter anderem für die Frontscheinwerfer zu schaffen.

DE 10 2013 021 941 A1 betrifft eine Fahrzeugbeleuchtungsvorrichtung, die eine Beleuchtungskulisse auf Basis von vom Fahrer eingegeben Daten bereitstellt, allerdings wird hier nicht auf das Einhalten von durch einschlägige gesetzliche Normen vorgegebene Grenzwerte für das auf die Fahrbahn abgestrahlte Lichtbild eingegangen. Allerdings wird eine Anwendung der in diesem Dokument benannten Fahrzeugbeleuchtungsvorrichtung nur auf Fahrzeuge in einem abgestellten Zustand offenbart. Eine über diesen Rahmen hinausgehende Anwendung wird weder erwünscht noch thematisiert und legt die Verwendung dieser Fahrzeugbeleuchtungsvorrichtung zu Erzeugung einer, vorzugsweise dynamischen den gesetzlichen Normen entsprechenden, Lichtverteilung bei einem Fahrzeug in Betrieb nicht nahe.

Grundsätzlich kann gesagt werden, dass Lichtsysteme, welche sich dazu eignen, segmentierte Lichtverteilungen (z.B. segmentierte Fernlichtverteilungen) zu erzeugen, nicht nur durch die optische Auslegung ein Lichtbild generieren. Durch moderne optische Komponenten wie Mikrospiegelarrays (DLP, DMD), aber auch durch Halbleiterlichtquellen wie LEDs (LED = lumineszenzemittierende Diode) oder Laserdioden besteht die Möglichkeit, die Lichtverteilung auch durch die Ansteuerung dieser Komponenten zu beeinflussen. Ein weiterer Einflussfaktor auf das Lichtbild ist die jeweilige Lichtintensitätsmodulation (Dimmung) der einzelnen Segmente, welche mithilfe einer auf einem Steuergerät installierten Software (eines Anwendungsprogramms) realisiert wird. Es kann also das Lichtbild, in gewissen Grenzen, per Software angepasst werden. Diese Grenzen sind sowohl als Maximal- als auch als Minimalwerte zum einen in gesetzlichen Normen festgelegt, die beispielsweise in speziellen Regelungen wie UN/ECE R123 Änderungsserie 01, Suppl.6 (Zur Frage des Rechts- und Linksverkehrs siehe Absätze 5.4. und 5.8 und insbesondere Absatz 5.8.2. mit den Unterabsätzen) und UN/ECE R48 vorzufinden sind, und zum anderen technische Grenzwerte. Z.B. kann die Gesamtlichtleistung gleichmäßig auf die gesamte Fahrbahn verteilt sein, oder mehr in der Mitte der Fahrbahn konzentriert sein. Im letzteren Fall stellt eine maximal zulässige Bestromung der Lichtquellen der Beleuchtungsvorrichtung im Fahrzeugscheinwerfer (beispielswese LEDs und / oder Laserlichtquellen) einen technischen Grenzwert dar. Darüber hinaus spielt bei den Lichtquellen oft die Wärmeabfuhr eine Rolle, weswegen weitere Bestromungsgrenzen entstehen. So können beispielsweiser bei zu hoher Leistung Hot Spots entstehen, welche die maximale Temperatur der LEDs und / oder Laserlichtquellen überschreiten.

Besonders bei den Lichtsystemen, die LEDs als Lichtquellen umfassen und segmentierte Lichtverteilungen erzeugen, werden die äußeren Segmente oft nur noch mit rund 10% betrieben. Die durchschnittliche Dimmung über alle Segmente kann etwa 30% betragen. Dabei sind die mittleren Segmente oft nur mit 80% betrieben. Dies ist hinsichtlich der Nutzleistung der Lichtquellen problematisch, die in diesem Fall im Betrieb nicht erreicht wird. D.h. es ist mehr Leistung installiert als tatsächlich genutzt wird, wodurch die Kosten der Vorrichtung (höhere Leistung führt im Normallfall auf höhere Kosten) steigen.

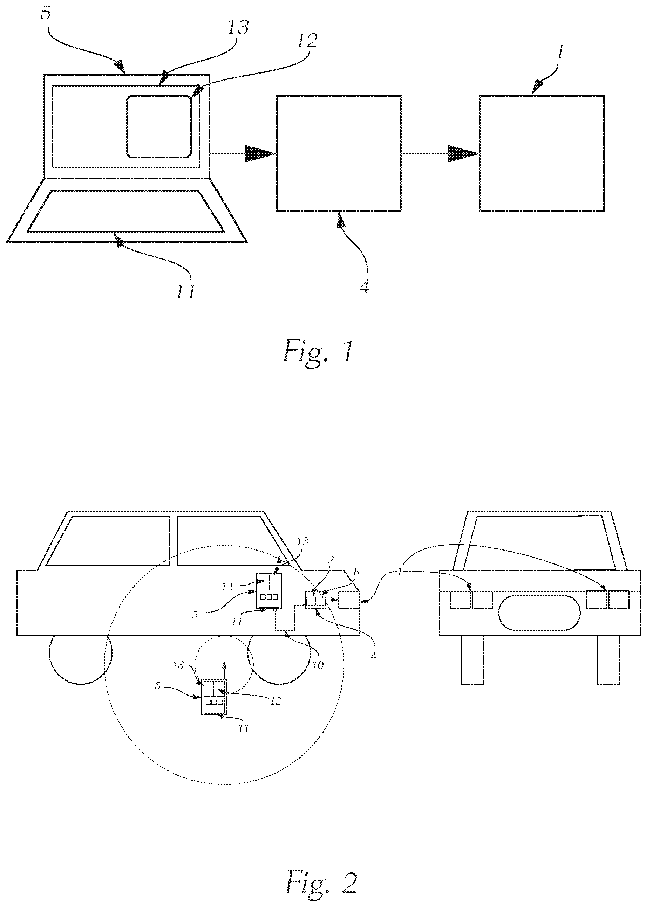

Darüber hinaus ist zu erwähnen, dass es eine bekannte technische Praxis im Bereich der Fahrzeuglichttechnik besteht, Lichtverteilungen für eine definierte, vorgegebene optische Konfiguration aus Lichtquellen, Linsen, Blenden, Reflektoren usw. mit Hilfe spezieller Anwendungsprogramme, die durch einen Fachmann (in dem Fall durch einen Lichttechniker) gewählte Konfigurationen und Einstellungen lichttechnischer Parameter zulassen, in einer dafür speziell eingerichteten Werkstatt auf Rechnern zu simulieren und diese einzustellen. Ein solches Einstellsystem ist schematisch in Fig. 1 dargestellt. Dabei können Scheinwerferprototypen sowohl vor dem Einbau in ein Versuchsfahrzeug als auch in einem in ein Versuchsfahrzeug eingebauten Zustand im Rahmen von Feldtests durch entsprechende Steuergeräte mit angebundenen Bedieneinheiten und mit Hilfe spezieller Anwendungsprogrammen getestet werden. Nachteilig bei solchen Systemen ist, dass diese sehr kostenaufwendig und kompliziert im Umgang sind, sodass die Bedienung solche Systeme Kenntnisse eines Lichttechnikers also eines Fachmanns bedarf, und nicht von einem über keine lichttechnischen Fachkenntnisse verfügenden Fahrzeugbenutzer verwendet werden kann.

Die Aufgabe der Erfindung besteht darin, die oben genannten Nachteile des Standes der Technik zu beseitigen und dem Fahrzeugbenutzer zu ermöglichen Lichtverteilungen unter der Berücksichtigung der oben beschriebenen technischen Grenzwerten und gesetzlichen Normen selbstdefinierte Lichtverteilungen zu erzeugen oder die bereits vorhandenen Lichtverteilungen individuell anzupassen.

Die Aufgabe der Erfindung wird mit einem Einstellsystem der oben angegebenen Art gelöst, bei welchem dem Lichtsteuergerät eine von der Beleuchtungsvorrichtung und von dem Lichtsteuergerät gesondert ausgebildete Bedieneinheit zugeordnet ist, welche Bedieneinheit dazu eingerichtet ist, benutzerseitige Eingaben entgegen zu nehmen, und die benutzerseitigen Eingaben an das Lichtsteuergerät zu übertragen, wobei das Lichtsteuergerät dazu eingerichtet ist, den Parametersatz zu einem weiteren zumindest eine weitere benutzerdefinierte Lichtverteilung (modifizierte Lichtverteilung) beschreibenden Parametersatz gemäß der benutzerseitigen Eingaben zu modifizieren, und die Beleuchtungsvorrichtung derart einzustellen, dass die Beleuchtungsvorrichtung Licht zur Bildung der zumindest einer weiteren benutzerdefinierten Lichtverteilung gemäß dem weiteren Parametersatz in einen Bereich vor der Beleuchtungsvorrichtung abstrahlt.

Es kann mit Vorteil vorgesehen sein, dass die Lichtverteilung und / oder die benutzerdefinierte Lichtverteilung als eine dynamische Lichtverteilung ausgebildet sind / ist.

Hinsichtlich des Inverkehrbringens des Einstellsystems kann es vorteilhaft sein, wenn die Lichtverteilung und / oder die benutzerdefinierte Lichtverteilung als eine gesetzlichen Normen entsprechende Lichtverteilung ausgebildet sind / ist.

Erfindungsgemäß und hinsichtlich der vom Lichtsteuergerät erforderlichen Rechenleistung ist es zweckmäßig, dass die Bedieneinheit dazu eingerichtet ist, den Parametersatz von dem Lichtsteuergerät abzurufen, den Parametersatz zu dem weiteren Parametersatz gemäß der benutzerseitigen Eingaben zu modifizieren und den modifizierten Parametersatz an das Lichtsteuergerät zu übertragen.

Um die Benutzereinstellungen zu behalten kann es vorteilhaft sein, wenn die Bedieneinheit dazu eingerichtet ist, den Parametersatz und den modifizierten Parametersatz zu speichern. Es kann zweckdienlich sein, wenn die Lichtverteilung und die benutzerdefinierte Lichtverteilung demselben definierten Typ der Lichtverteilungen angehören.

Um das Bedienen der Bedieneinheit zu vereinfachen, kann es vorgesehen sein, dass der Benutzer zwischen Typen der Lichtverteilungen wählen kann und diese innerhalb des Typs anpasst. Dabei kann es zweckdienlich sein, wenn der Typ der Lichtverteilung eine Abblendlichtverteilung und/oder eine Fernlichtverteilung und/oder eine Tagfahrlichtverteilung und/oder eine Kurvenlichtverteilung und/oder eine Nebellichtverteilung und/oder eine Schlechtwetterlichtverteilung ist.

Darüber hinaus kann es besonders vorteilhaft sein, wenn die Bedieneinheit die benutzerseitigen Eingaben an das Lichtsteuergerät drahtlos, vorzugsweise mittels NFC (near-field communication) oder Bluetooth oder Infrarot oder WLAN (wireless local area network) oder Certified Wireless USB (Universal Serial Bus) oder über ein Mobilfunknetz, insbesondere über ein GSM Netz (Global System for Mobile Communications) oder ein UMTS Netz (Universal Mobile Telecommunications System) oder ein LTE Netz (Long Term Evolution) oder ein LTE-Advanced Netz, überträgt.

Des Weiteren kann es zweckmäßig sein, wenn die Bedieneinheit die benutzerseitigen Eingaben an das Lichtsteuergerät kabelgebunden, vorzugsweise über ein USB-Kabels, überträgt.

Die oben genannten Ausbildungsvarianten der Bedieneinheit und verschiedene Möglichkeiten der Übertragung der benutzerseitigen Eingaben an das Lichtsteuergerät ergeben den Vorteil, dass der Fahrzeugbenutzer die gewünschten Einstellungen der Lichtverteilungen nicht im Fahrzeug und nicht in der Nähe des Fahrzeuges vornehmen muss. Weiterhin muss während der Tätigung der Eingaben keine Verbindung zwischen der Bedieneinheit und dem Lichtsteuergerät bestehen.

Darüber hinaus kann es vorteilhaft sein, wenn die Bedieneinheit benutzerseitige Eingabemittel aufweist und auf der Bedieneinheit zumindest ein auf der Bedieneinheit ausführbares Anwendungsprogramm, insbesondere eine Mobile App (vom englischen "application software"), gespeichert ist, welches Anwendungsprogramm dazu eingerichtet ist, und den Parametersatz zum modifizierten Parametersatz gemäß der durch die benutzerseitigen Eingabemittel erfolgenden Eingaben zu modifizieren.

Hinsichtlich der Anschaulichkeit der benutzerdefinierten Lichtverteilung kann es vorteilhaft sein, wenn die Bedieneinheit benutzerseitige Ausgabemittel aufweist und auf der Bedieneinheit zumindest ein auf der Bedieneinheit ausführbares Anwendungsprogramm, insbesondere eine Mobile App, gespeichert ist, welches Anwendungsprogramm dazu eingerichtet ist, die benutzerdefinierte Lichtverteilung zu simulieren und dem Fahrzeugbenutzer über die Ausgabemittel schematisch anzuzeigen.

Weiters ist erfindungsgemäß vorgesehen, dass die Bedieneinheit einen ersten Teil und einen zweiten Teil aufweist, wobei der erste Teil als ein tragbares Endgerät, vorzugsweise ein Mobiltelefon, insbesondere ein Smartphone, oder ein Laptop, insbesondere ein Notebook, oder ein Tablet ausgebildet ist, und der zweite Teil als ein Fahrzeug-Bordcomputer ausgebildet ist. Darüber hinaus ist es zweckdienlich, wenn der erste Teil mit dem zweiten Teil kabelgebunden und / oder drahtlos kommuniziert.

Die Aufgabe wird auch mit einem Verfahren der eingangs genannten Art gelöst, bei welchem erfindungsgemäß benutzerseitige Eingaben mittels einer von der Beleuchtungsvorrichtung und von dem Lichtsteuergerät gesondert ausgebildeten und dem Lichtsteuergerät zugeordneten Bedieneinheit entgegengenommen werden, der Parametersatz zu einem weiteren zumindest eine weitere benutzerdefinierte Lichtverteilung beschreibenden Parametersatz gemäß der benutzerseitigen Eingaben modifiziert wird, und die Beleuchtungsvorrichtung dergestalt eingestellt wird, dass die Beleuchtungsvorrichtung Licht zur Bildung der benutzerdefinierten Lichtverteilung gemäß dem modifizierten Parametersatz in einen Bereich vor der Beleuchtungsvorrichtung abstrahlt.

Bei einem aus dem Stand der Technik bekannten Verfahren ist vorgesehen, dass die Bedieneinheit die benutzerseitigen Eingaben an das Lichtsteuergerät überträgt, und das Lichtsteuergerät den Parametersatz zu dem modifizierten Parametersatz modifiziert.

Hinsichtlich der Rechenleistung des Lichtsteuergeräts ist erfindungsgemäß vorgesehen, dass die Bedieneinheit den Parametersatz von dem Lichtsteuergerät (4) abruft, den Parametersatz zu dem weiteren Parametersatz gemäß der benutzerseitigen Eingaben modifiziert, und den modifizierten Parametersatz an das Lichtsteuergerät überträgt.

Darüber hinaus kann es zweckdienlich sein, wenn der Parametersatz und der modifizierte Parametersatz auf der Bedieneinheit gespeichert werden.

Hinsichtlich der Benutzerfreundlichkeit kann es vorteilhaft sein, wenn ein Anwendungsprogramm, beispielsweise eine mobile App, auf der Bedieneinheit ausgeführt wird, wobei das Anwendungsprogramm die benutzerseitigen Eingaben entweder (wie aus dem Stand der Technik bekannt) an das Lichtsteuergerät überträgt oder (erfindungsgemäß) den Parametersatz zum weiteren Parametersatz gemäß der benutzerseitigen Eingaben modifiziert.

Hinsichtlich der Anschaulichkeit der vorgenommenen Modifikationen kann es vorteilhaft sein, wenn das Anwendungsprogramm auf der Bedieneinheit die Lichtverteilung und/oder die benutzerdefinierte Lichtverteilung simuliert oder simuliert und anzeigt. Es ist zweckmäßig, wenn die Bedieneinheit und das Lichtsteuergerät drahtlos und/oder kabelgebunden kommunizieren.

Darüber hinaus ist erfindungsgemäß vorgesehen, dass die Bedieneinheit einen ersten Teil und einen zweiten Teil aufweist, wobei der erste Teil als ein tragbares Endgerät, vorzugsweise ein Mobiltelefon, insbesondere ein Smartphone, oder ein Laptop, insbesondere ein Notebook, oder ein Tablet ausgebildet ist, und der zweite Teil als ein Fahrzeug-Bordcomputer ausgebildet ist und das Anwendungsprogramm die Lichtverteilung und/oder die benutzerdefinierte Lichtverteilung auf dem ersten Teil simuliert und auf dem ersten Teil und/oder auf dem zweiten Teil anzeigt.

Die Erfindung samt weiteren Vorteilen ist im Folgenden an Hand beispielsweiser Ausführungsformen näher erläutert, die in der Zeichnung veranschaulicht sind. In dieser zeigt
Fig. 1 ein Einstellsystem mit einer Bedieneinheit, einem Lichtsteuergerät und Scheinwerferprototypen gemäß dem Stand der Technik,
Fig. 2 die wichtigsten Komponenten der erfindungsgemäßen Einstellsystems und deren Zusammenhang,
Fig. 3 Zusammenwirken einer Bedieneinheit, eines Lichtsteuergeräts und einer Beleuchtungsvorrichtung der Fig. 2,
Fig. 4 eine bevorzugte Ausführungsform des Einstellsystems der Fig. 2
Fig. 5 eine erfindungsgemäße Ausführungsform des Einstellsystems der Fig. 2 mit einer zweiteiligen Bedieneinheit,
Fig. 6 eine Lichtverteilung,
Fig. 7 eine benutzerdefinierte Lichtverteilung,
Fig. 8 wesentliche Schritte eines erfindungsgemäßen Verfahrens zur Modifizierung einer, vorzugsweise dynamischen, Lichtverteilung mittels des Einstellsystems der Fig. 2,
Fig. 9 eine bevorzugte Variante des Verfahrens der Fig. 8, und
Fig. 10 eine weitere bevorzugte Ausführungsform des Verfahrens der Fig. 8.

Zunächst wird auf die Fig. 1 Bezug genommen, welche wie eingangs erwähnt ein Einstellsystem nach dem Stand der Technik darstellt, in dem eine Bedieneinheit 5 mit Hilfe eines Anwendungsprogramms 12 über ein Lichtsteuergerät 4 einen Scheinwerferprototypen 1 derart konfigurieren (einstellen) kann, dass der Scheinwerferprototyp 1 eine von einem Lichttechniker gewünschte Lichtverteilung abstrahlt. Die Bedieneinheit 5 kann beispielsweise ein Arbeitsplatzrechner oder tragbarer Rechner sein, welcher Eingabemittel 11 und Ausgabemittel 13 aufweist.

Weiters können auf einer solchen Bedieneinheit 5 mit Hilfe anderer spezialisierter Anwendungsprogramme 12 Simulationen der Lichtverteilung für definierte Scheinwerferkonfigurationen durchgeführt werden. Allerdings wir oben erläutert können solche Einstellsysteme nicht ohne fachmännische Kenntnisse bedient werden.

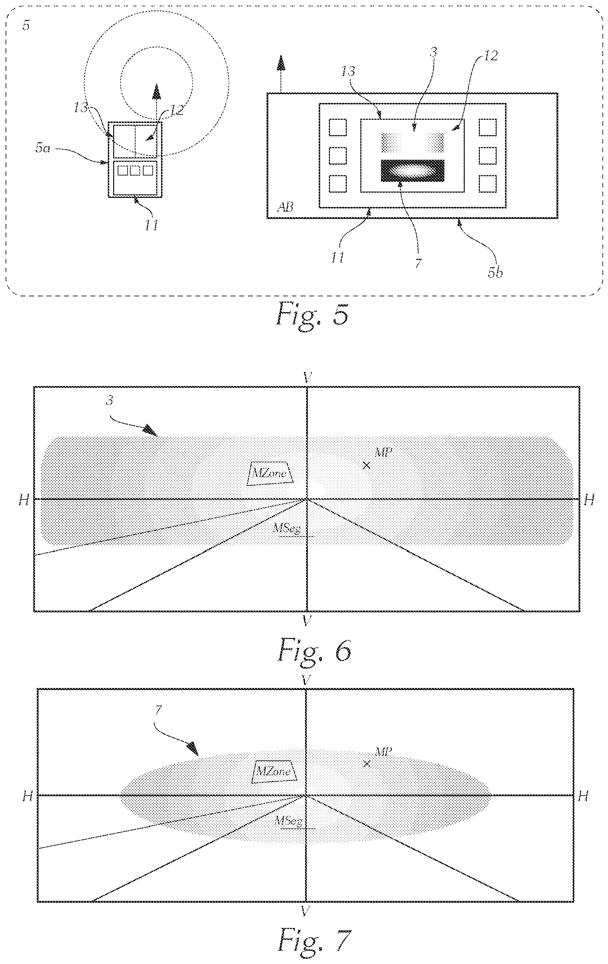

Die Fig. 2 die wichtigsten Komponenten der erfindungsgemäßen Einstellsystems und deren Zusammenhang schematisch darstellt. Dabei weist die Beleuchtungsvorrichtung 1 insgesamt vier Frontscheinwerfer 1 auf, die Licht zur Bildung einer Lichtverteilung 3 (siehe Fig. 5) auf die Fahrbahn abstrahlen, obwohl die hier angegebene Anzahl der Scheinwerfer nicht vorschreibend aufgefasst werden soll. Es kann sich beispielsweise auch um einen einzigen Frontscheinwerfer (bei einspurigen Fahrzeugen) handeln.

Der Begriff "Fahrbahn" wird hier zur vereinfachten Darstellung verwendet, denn selbstverständlich hängt es von den örtlichen Gegebenheiten ab, ob sich das Lichtbild tatsächlich auf der Fahrbahn befindet oder auch darüber hinaus erstreckt. Z.B. um die abgestrahlten Lichtverteilungen zu testen, erzeugt man eine Projektion des Lichtbildes auf eine vertikale Fläche entsprechend der einschlägigen Normen, beispielsweise entsprechend der Regelungen Nummer 123 und 48 der Wirtschaftskommission für Europa der Vereinten Nationen (UN/ECE) "Einheitliche Bedingungen für die Genehmigung von adaptiven Frontbeleuchtungssystemen (AFS) für Kraftfahrzeuge" und "Einheitliche Bedingungen für die Genehmigung der Fahrzeuge hinsichtlich des Anbaus der Beleuchtungs- und Lichtsignaleinrichtungen", den für die Vereinigten Staaten von Amerika gültigen Federal Motor Vehicle Safety Standard FMVSS No. 108 "Lamps, reflective devices, and associated equipment", der im Code of Federal Regulations CFR unter dem Title 49: Transportation im Chapter V, Part 571-Federal Motor Vehicle Standards im Subpart B als §571.108 angegeben ist, sowie dem National Standard of the People's Republic of China GB/T 30036/2013 "Adaptive Front-Lighting System for Motor Vehicles", die sich auf die KFZ-Beleuchtungstechnik beziehen.

Um eine Lichtverteilung zu erzeugen, werden die Scheinwerfer 1 von einem Lichtsteuergerät 4 angesteuert. Im Zusammenhang mit der vorliegenden Erfindung wird als "Lichtsteuergerät" jenes fahrzeugseitiges Steuergerät, bzw. jene Gesamtheit von Steuergeräten, bezeichnet, das für die Ansteuerung der optisch relevanten Scheinwerferkomponenten (nicht gezeigt), z.B. Lichtquellen (Lampen, Laserdioden oder LEDs), Reflektoren, Spiegel, Prismen, Linsen, Lichtkonversionsmittel und andere Scheinwerferkomponenten, die für Erzeugung, Umlenkung, Umwandlung, Fokussierung/Defokussierung, Kollimation und Leitung von Licht geeignet sind, oder ganze aus den oben genannten Scheinwerferkomponenten zusammengesetzte Lichtmodule.

Die optisch relevanten Scheinwerferkomponenten werden vom Lichtsteuergerät 4 je nach Typ der zu erzeugenden Lichtverteilung (z.B. Abblend-, Fern- oder Schlechtwetterlichtverteilung) unterschiedlich gesteuert. Dabei sind in dem Lichtsteuergerät 4 Daten in Form eines Parametersatzes 2 enthalten, wobei jeder Parameter zumindest eine Einstellung einer Scheinwerferkomponente beschreibt. So kann beispielsweise ein Parameter das Ein- oder Ausschalten eines ganzen Lichtmoduls (z.B. Fernlichtmoduls) im Scheinwerfer beschreiben und nimmt dabei nur zwei Werte an: "EIN" (das Lichtmodul ist an) und "AUS" (das Lichtmodul ist aus). Ein anderer Parameter kann beispielsweise Intensitätsmodulation von Laserlichtquellen oder Schwenkung von Mikrospiegeln beschreiben (für die Erklärung der Begriffe "Intensitätsmodulation" der Laserlichtquellen und "Mikrospiegel" siehe z.B. AT 514834 A2). Dabei können die Parameter statisch, quasi-statisch (diskrete Parameter) oder dynamisch (kontinuierliche Parameter, wie z.B. Schwenkgeschwindigkeit bei einer dynamischen Kurvenlichtverteilung oder gleitende Leuchtweite) verändert werden. Dabei wird der Begriff "quasi-statisch" besonders oft im Zusammenhang mit schwingenden Mikrospiegeln verwendet und bedeutet, dass die Mikrospiegel eine endliche Anzahl von Schwenklagen aufweisen, zwischen welchen Schwenklagen im Betrieb der Beleuchtungsvorrichtung 1 mittels des Lichtsteuergeräts 4 umgeschaltet werden kann.

Bei dem Einstellsystem ist erfindungsgemäß eine Bedieneinheit 5 vorgesehen, die dem Lichtsteuergerät 4 zugeordnet ist. Unter dem Begriff "Bedieneinheit" wird im Zusammenhang mit der vorliegenden Erfindung jene Vorrichtung verstanden, die dazu eingerichtet ist, die Eingaben des Fahrzeugbenutzers entgegenzunehmen, zu modifizieren und an das Lichtsteuergerät 4 drahtlos oder kabelgebunden zu übertragen, dass das Lichtsteuergerät 4 zumindest einen Teil der Parameter im Parametersatz modifiziert und gemäß dem modifizierten Parametersatz 8 die Beleuchtungsvorrichtung 1 dergestalt steuert, dass die Beleuchtungsvorrichtung eine modifizierte benutzerdefinierte Lichtverteilung abstrahlt. Dabei kann es sich sowohl um "statische" als auch um "dynamische" Lichtverteilungen handeln. Für die Erklärung der Begriffe "statisch" und "dynamisch" im Zusammenhang mit den Lichtverteilungen wird hier auf den Stand der Technik verwiesen (siehe z.B. AT 511760 B1). Die Bedieneinheit 5 kann dabei unterschiedlich, beispielsweise als ein Smartphone, ein Tablet oder ein Laptop, ausgebildet sein. Wichtig ist, dass die Bedieneinheit 5 über eine drahtlose und/oder kabelgebundene Kommunikationsstelle verfügt, welche zur Kommunikation mit dem Lichtsteuergerät 4 benutzt werden kann, beispielsweise über Bluetooth oder über ein USB-Kabel 10. Darüber hinaus weist die Bedieneinheit 5 Eingabemittel 11 auf, mithilfe derer der Fahrzeugbenutzer seine Eingaben 6 macht und die voreingestellte Lichtverteilung modifiziert. Des Weiteren ist es vorteilhaft, wenn die Bedieneinheit 5 Ausgabemittel 13 aufweist und auf der Bedieneinheit 5 ein ausführbares Anwendungsprogramm 12 gespeichert ist, welches die benutzerdefinierte Lichtverteilung simuliert, schematisch darstellt und mithilfe der Ausgabemittel 13 dem Fahrzeugbenutzer anzeigt.

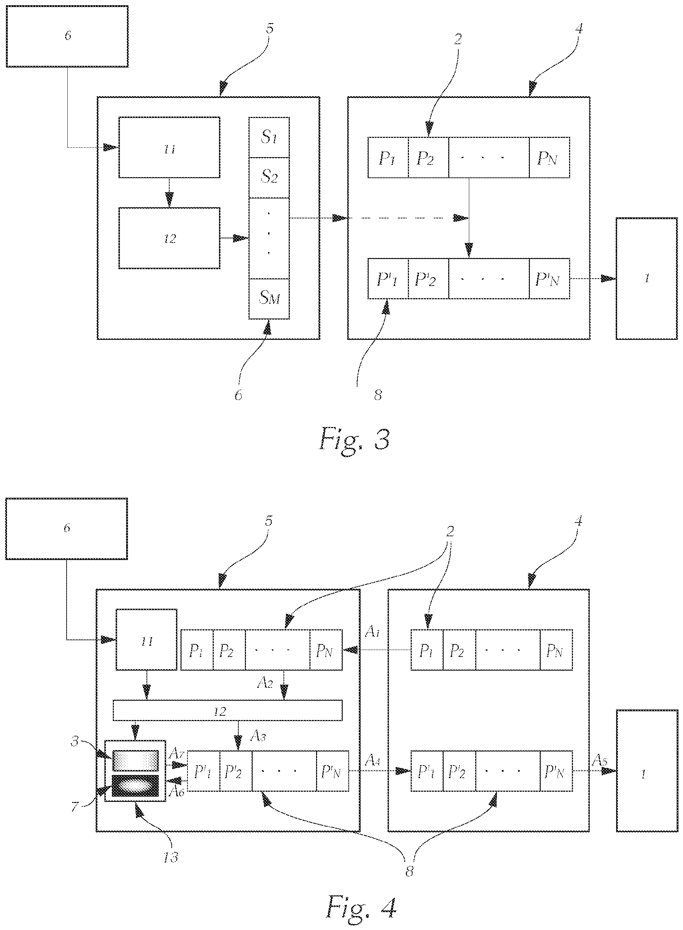

Die Fig. 3 zeigt schematisch eine Ausführungsform der Erfindung, wobei der hier nicht gezeigte Fahrzeugbenutzer seine Eingaben 6 mittels der Eingabemittel 11 auf der Bedieneinheit 5 tätigt. Anschließend werden die Eingaben 6 von dem auf der Bedieneinheit 5 gespeicherten Anwendungsprogramm 12 verarbeitet und als ein vom Lichtsteuergerät 4 erkennbarer Datensatz S₁, S₂, bis S_{M} an das Lichtsteuergerät 4 gesendet. Dabei umfasst der Datensatz eine Anzahl von Parametern, welche Anzahl als M bezeichnet wird. Nach dem Erhalt des Datensatzes S₁ bis S_{M}, werden diese vom Lichtsteuergerät 4 zur Modifizierung des Parametersatzes 2, welcher Parametersatz eine als N bezeichnete Anzahl von Parametern P₁ bis P_{N} umfasst, zu einem weiteren Parametersatz 8, welcher Parametersatz ebenfalls eine als N bezeichnete Anzahl von Parametern P'₁ bis P'_{N} umfasst, verwendet. Der modifizierte Parametersatz 8 wird an die Beleuchtungsvorrichtung 1 gesendet, wodurch eine in Betrieb genommene Beleuchtungsvorrichtung 1 eine weitere Lichtverteilung 7 (siehe Fig. 6) erzeugt. Die Anzahl M der Parameter im Datensatz S₁, S₂, ... S_{M} überschreitet in der Regel die Anzahl N der Parameter im Parametersatz 2. In vielen Fällen (z.B. bei einem stark beladenen Fahrzeug) ist es sogar vorteilhafter, der Datensatz S₁, S₂, ... S_{M} eine geringe Anzahl der Parameter umfasst, und die ursprüngliche Lichtverteilung 3 nur geringfügig modifiziert wird.

Bei einer weiteren zweckmäßigen Variante (Fig. 4) der vorliegenden Erfindung ist vorgesehen, dass die Bedieneinheit 5 den Parametersatz 2 abrufen kann und Ausgabemittel 13 aufweist. Dabei wird der Parametersatz 2 zu dem weiteren Parametersatz 8 mithilfe des Anwendungsprogramms 12 gemäß den durch die Eingabemittel 11 erfolgten benutzerseitigen Eingaben 6 modifiziert, welcher modifizierte Parametersatz 8 an das Lichtsteuergerät 4 gesendet und anschließend vom Lichtsteuergerät 4 unverändert an die Beleuchtungsvorrichtung 1 weitergeleitet wird. Dies entspricht der Pfeilabfolge A₁, A₂, A₃, A₄, A₅ in der Fig. 4. Beide Parametersätze 2 und 8 können auf der Bedieneinheit gespeichert werden. Darüber hinaus ist es zweckdienlich, wenn das Anwendungsprogramm 12 und die Ausgabemittel 13 derart zusammenwirken, dass die durch den Parametersatz 2 beschriebene Lichtverteilung 3 und / oder die durch den modifizierten Parametersatz 8 beschriebene Lichtverteilung 8 dem Fahrzeugbenutzer durch die Ausgabemittel 13 angezeigt werden und der Fahrzeugbenutzer die benutzerdefinierte Lichtverteilung 7 durch weitere mittels der Eingabemittel 11 erfolgende Eingaben 6 weiter modifizieren kann. Dies entspricht der Pfeilabfolge A₁, A₂, A₃, A₆, A₇, A₅ in der Fig. 4.

Bei der Fig. 5 handelt es sich um die erfindungsgemäße Ausführungsform des Einstellsystems, wobei die Bedieneinheit 5 einen ersten Teil 5a und einen zweiten Teil 5b aufweist. Der erste, hier als tragbares Endgerät (Smartphone, Tablet, Laptop) ausgebildete Teil 5a und der zweite, hier als im Armaturenbrett AB eines hier nicht gezeigten Fahrzeugs verbauter Fahrzeug-Bordcomputer ausgebildete Teil 5b der Bedieneinheit 5 können miteinander sowohl drahtlos als auch kabelgebunden je nach Präferenz des Fahrzeugbenutzers kommunizieren. Darüber hinaus weist sowohl der erste Teil 5a als auch der zweite Teil 5b Eingabemittel 11 durch die der Fahrzeugbenutzer gewünschte Modifikationen der vorgegebenen Lichtverteilung 3 eingeben kann. Die Modifikationen der Lichtverteilung 3, welche in einer benutzerdefinierten Lichtverteilung 7 resultieren, können vom Fahrzeugbenutzer sofort über die Ausgabemittel 13 (beispielsweise ein Bildschirm, welche berührungsempfindlich sein kann (Touchscreen)) auf dem ersten Teil 5a und / oder auf dem zweiten Teil 5b angesehen werden. Das Anzeigen der Lichtverteilungen auf den Ausgabemitteln 13 erfolgt mittels des auf der Bedieneinheit 5 ausführbaren Anwendungsprogramms 12. Es kann auch vorgesehen sein, dass das Ausführungsprogramm 12 eine zuvor bereits erprobte Auswahl an abgestimmten Lichtverteilungen bietet, welche vom Fahrzeugbenutzer ausgewählt und als benutzerdefinierte Lichtverteilung 7 umgesetzt werden können. Dies kann der Fall sein, wenn ein, zwei oder mehr verschiedene gesetzlichen Normen entsprechende Lichtverteilungen beschreibende Parametersätze im Anwendungsprogramm 12 gespeichert sind. Somit ist notfalls auch immer ein "Rettungsanker" verfügbar, falls sich der Fahrzeugbenutzer mit der Vielzahl an Einstellungsmöglichkeiten überfordert fühlt.

Des Weiteren ist es denkbar, dass das Anwendungsprogramm 12 dazu eingerichtet ist, eine dynamische Simulation der Lichtverteilung 3 und / oder der benutzerdefinierten Lichtverteilung 7 über die Ausgabemittel 13 dem Fahrzeugbenutzer anzeigt. Dabei kann mit Vorteil vorgesehen sein, dass die simulierten Lichtverteilungen aus verschiedenen Perspektiven und in verschiedenen Farbendarstellungen, beispielsweise in einer Falschfarbendarstellung oder in einem Munsell-Farbsystem, angezeigt werden. Hierbei sind z.B. eine Fahrersicht und eine Vogelperspektive (Birds Eye View) besonders vorteilhaft, um die Veränderungen zu veranschaulichen. Durch das Simulieren und das Anzeigen kann die benutzerdefinierte Lichtverteilung 7 an die Fahrzeugbenutzervorgaben angepasst und an die vom Fahrzeugbenutze gewünschte Lichtverteilung dahingehend optimiert werden, ohne langwierige Probefahrten unternehmen zu müssen. Dabei kann es auch vorgesehen sein, dass das Anwendungsprogramm 12 der Bedieneinheit 5 über akustische und / oder optische Signale den Fahrzeugbenutzer warnt, wenn die benutzerdefinierte Lichtverteilung 7 nicht den einschlägigen gesetzlichen Normen entspricht.

Im Allgemeinen kann das Einstellsystem der Fig. 2 oder der Fig. 5 wie folgt verwendet werden: Der Fahrzeugbenutzer schaltet die Fahrzeugzündung und / oder den Fahrzeugmotor ein, startet das Anwendungsprogramm 12 auf der Bedieneinheit 5 und modifiziert die Lichtverteilung 3 zu der benutzerdefinierten Lichtverteilung 7. Alternativ kann die Modifizierung auch fern von dem Fahrzeug vorgenommen werden. Die tatsächliche Modifizierung der Lichtverteilung geschieht beim nächsten Start des Fahrzeugs, wenn die benutzerseitigen Eingaben von der Bedieneinheit an das Lichtsteuergerät gelangen.

In der Figuren 6 und 7 zeigen je ein Beispiel der Lichtverteilung 3 (Fig. 6) und der benutzerdefinierten Lichtverteilung 7 (Fig. 6). Dabei ist die Lichtverteilung 3 in der Fig. 6 eine beispielhafte Lichtverteilung, die nicht unbedingt den gesetzlichen Normen entsprechen muss, wohingegen die benutzerdefinierte Lichtverteilung der Fig. 7 eine den einschlägigen gesetzlichen Normen entsprechende Fernlichtverteilung ist. Eine alternative und von dem Fahrzeugbenutzer wohl bevorzugte Situation ist, wenn sowohl die Lichtverteilung 3 als auch die benutzerdefinierte Lichtverteilung 7 einschlägige gesetzliche Normen erfüllen und vorgeschriebene Werte der Beleuchtungsstärke (Lichtstromdichte) in den vorgeschriebenen Messpunkten MP, Messsegmenten MSeg und Messzonen MZone in den Figuren 5 und 6, erreichen. Die genaue Position dieser Messpunkte, Messsegmente und Messzonen ist den einschlägigen Normen (z.B. ECE R123) zu entnehmen.

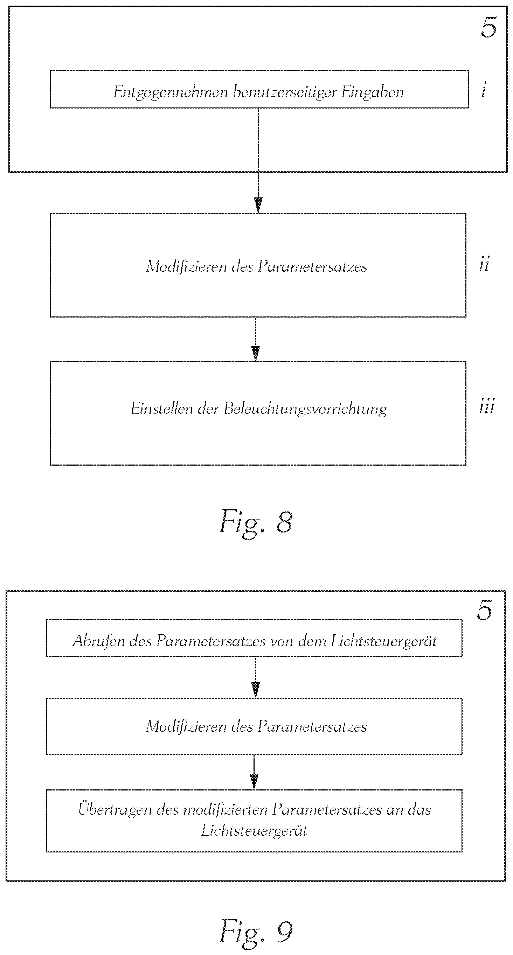

Die wesentlichen Schritte eines erfindungsgemäßen Verfahrens zur Modifizierung einer, vorzugsweise dynamischen, Lichtverteilung mittels des Einstellsystems sind in Fig. 8 gezeigt. Dabei wird der Schritt i) mittels der Bedieneinheit 5 (siehe Fig. 2) realisiert.

In dem ersten Schritt i) gibt ein Fahrzeugbenutzer seine Eingaben durch die Eingabemittel 11 in die Bedieneinheit 5 ein. Diesen Eingaben 6 zufolge wird in einem weiteren Schritt ii) der Parametersatz 2 zu einem modifizierten Parametersatz 8 modifiziert, welcher nun als Grundlage für die Einstellung der Beleuchtungsvorrichtung 1 seitens des Lichtsteuergeräts 4 dient. In dem letzten vierten Schritt iii) wird die Beleuchtungsvorrichtung 1 gemäß dem modifizierten Parametersatz 8 dergestalt eingestellt, dass sie Licht zur Bildung der benutzerdefinierten Lichtverteilung 7 auf die Fahrbahn abstrahlt.

Dabei kann das Übertragen drahtlos, vorzugsweise mittels NFC oder Bluetooth oder Infrarot oder WLAN oder Certified Wireless USB oder über ein Mobilfunknetz, insbesondere über ein GSM Netz oder ein UMTS Netz oder ein LTE Netz oder ein LTE-Advanced Netz oder kabelgebunden, vorzugsweise über ein USB-Kabels, erfolgen.

Bei der erfindungsgemäßten in Fig. 9 gezeigten Ausführungsform wird die Modifizierung des Parametersatzes 2 auf der Bedieneinheit 5 vorgenommen. Dabei ruft die Bedieneinheit 5 zuerst den Parametersatz 2 von dem Lichtsteuergerät 4 ab, modifiziert ihn anschließend zu dem modifizierten Parametersatz 8 gemäß der im Schritt i) erfolgten benutzerseitigen Eingaben 6, und überträgt den modifizierten Parametersatz 8 an das Lichtsteuergerät 4.

Zusätzlich ist ein Verfahren vorstellbar, bei dem, wie in Fig. 3 erläutern, die Bedieneinheit 5 die benutzerseitigen Eingaben 6 direkt an das Lichtsteuergerät 4 überträgt, und das Lichtsteuergerät 4 den Parametersatz 2 zu dem modifizierten Parametersatz 8 modifiziert und zur Einstellung der Beleuchtungsvorrichtung 1 anwendet.

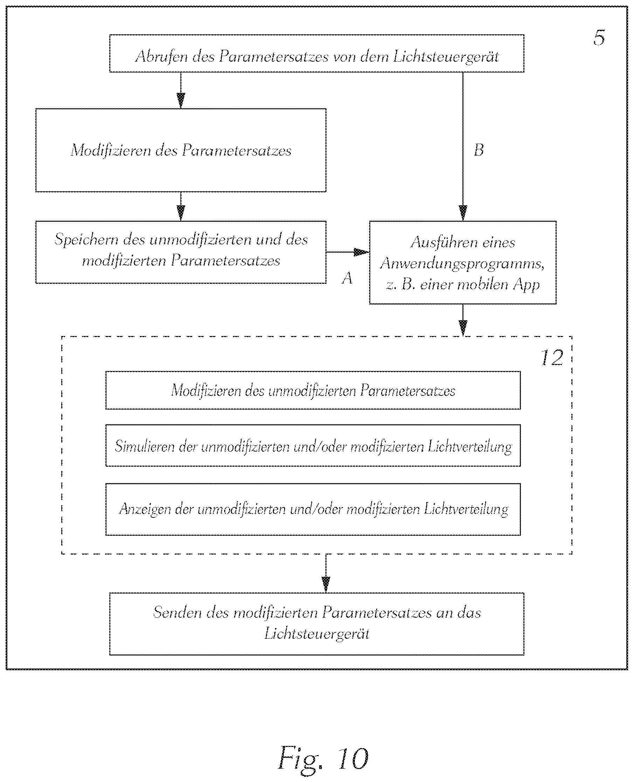

Bei einer weiteren bevorzugten Ausführungsform des erfindungsgemäßen Verfahrens, dessen Schritte in Fig. 10 dargestellt sind, ist vorgesehen, dass sowohl der unmodifizierte Parametersatz 2 als auch der modifizierte Parametersatz 8 auf der Bedieneinheit 5 gespeichert werden. Dabei wird eins Anwendungsprogramms 12, beispielsweise eine mobile App, ausgeführt, welches Anwendungsprogramm 12 auf die gespeicherten Parametersätze (Pfeil A) und/oder auf den abgerufenen Parametersatz (Pfeil B) Zugriff hat. Darüber hinaus kann das Anwendungsprogramm 12 den unmodifizierten Parametersatz 2 zu dem modifizierten Parametersatz 8 gemäß der benutzerseitigen Eingaben 6 modifizieren, die Lichtverteilung 3 und / oder die benutzerdefinierte Lichtverteilung 7 simulieren und die Lichtverteilung 3 und / oder die benutzerdefinierte Lichtverteilung 7 über Ausgabemittel 13, mit welchen das Anwendungsprogramm zusammenwirkt, anzeigen. Wichtig hierbei ist, dass die im Anwendungsprogramm 12 realisierbaren Schritte in einer beliebigen Reihenfolge ausgeführt werden können. D.h. der Fahrzeugbenutzer kann beispielsweise, nachdem die Eingaben getätigt wurden, die Lichtverteilung 3 und die benutzerdefinierte Lichtverteilung 7 anzeigen lassen und diese beiden Verteilungen vergleichen, wobei der Fahrzeugbenutzer anschließend weitere Eingaben zwecks einer weiteren Modifizierung der Lichtverteilung vornehmen kann. Alternativ kann der Fahrzeugbenutzer nur die Lichtverteilung 3 anzeigen lassen und, falls keine Änderungen erwünscht sind, den unmodifizierten Parametersatz an das Lichtsteuergerät mittels der Bedieneinheit ohne Änderungen übertragen.

Die in der Beschreibung, den Ansprüchen und den Figuren offen gelegten Ausführungsformen der Erfindung sind nur als Beispiele und nicht einschränkend zu verstehen. Ausführungsformen, die sich aus Kombinationen der beschriebenen Ausführungsformen ergeben sollen hiermit ebenfalls umfasst sein.

## Patentansprüche

1. Einstellsystem für eine Beleuchtungsvorrichtung für Fahrzeuge, welche Beleuchtungsvorrichtung (1) dazu eingerichtet ist, Licht zur Bildung zumindest einer durch einen Parametersatz (2) beschriebenen Lichtverteilung (3) in einen Bereich vor der Beleuchtungsvorrichtung (1) abzustrahlen, wobei das Einstellsystem zum Modifizieren der zumindest einen durch den Parametersatz (2) beschriebenen Lichtverteilung (3) eingerichtet ist, und wobei das Einstellsystem umfasst:
ein Lichtsteuergerät (4),
- in welchem Lichtsteuergerät (4) der die Lichtverteilung (3) beschreibende Parametersatz (2) gespeichert ist, und
- welches Lichtsteuergerät (4) der Beleuchtungsvorrichtung (1) zugeordnet ist und dazu eingerichtet ist, die Beleuchtungsvorrichtung (1) derart zu steuern, dass die Beleuchtungsvorrichtung (1) Licht zur Bildung der zumindest einen Lichtverteilung (3) gemäß dem Parametersatz (2) in einen Bereich vor der Beleuchtungsvorrichtung (1) abzustrahlen,
dem Lichtsteuergerät (4) eine von der Beleuchtungsvorrichtung (1) und von dem Lichtsteuergerät (4) gesondert ausgebildete Bedieneinheit (5) zugeordnet ist,
welche Bedieneinheit (5) dazu eingerichtet ist,
- benutzerseitige Eingaben (6) entgegen zu nehmen, und
- die benutzerseitigen Eingaben (6) an das Lichtsteuergerät (4) zu übertragen, wobei das Lichtsteuergerät (4) dazu eingerichtet ist,
- den Parametersatz (2) zu einem weiteren zumindest eine weitere benutzerdefinierte Lichtverteilung (7) beschreibenden Parametersatz (8) gemäß der benutzerseitigen Eingaben (6) zu modifizieren, und
- die Beleuchtungsvorrichtung (1) derart einzustellen, dass die Beleuchtungsvorrichtung (1) Licht zur Bildung der zumindest einer weiteren Lichtverteilung (7) gemäß dem weiteren Parametersatz (8) in einen Bereich vor der Beleuchtungsvorrichtung (1) abstrahlt, **dadurch gekennzeichnet, dass**
die Bedieneinheit (5) zusätzlich dazu eingerichtet ist,
- den Parametersatz (2) von dem Lichtsteuergerät (4) abzurufen,
- den Parametersatz (2) zu dem weiteren Parametersatz (8) gemäß der benutzerseitigen Eingaben (6) zu modifizieren, und
- den modifizierten Parametersatz (8) an das Lichtsteuergerät (4) zu übertragen, wobei
- die Bedieneinheit (5) einen ersten Teil (5a) und einen zweiten Teil (5b) aufweist, wobei der erste Teil (5a) als ein tragbares Endgerät ausgebildet ist und der zweite Teil (5b) als ein Fahrzeug-Bordcomputer ausgebildet ist.

2. Einstellsystem nach Anspruch 1, **dadurch gekennzeichnet, dass** die Lichtverteilung (3) und / oder die benutzerdefinierte Lichtverteilung (7) als eine gesetzlichen Normen entsprechende Lichtverteilung ausgebildet sind / ist.

3. Einstellsystem nach Anspruch 1 oder 2, **dadurch gekennzeichnet, dass** die Bedieneinheit (5) dazu eingerichtet ist, den Parametersatz (2) und den modifizierten Parametersatz (8) zu speichern.

4. Einstellsystem nach einem der Ansprüche 1 bis 3, **dadurch gekennzeichnet, dass** das tragbare Endgerät als ein Mobiltelefon, insbesondere ein Smartphone, oder ein Laptop, insbesondere ein Notebook, oder ein Tablet ausgebildet ist.

5. Einstellsystem nach einem der Ansprüche 1 bis 4, **dadurch gekennzeichnet, dass** die Bedieneinheit (5) die benutzerseitigen Eingaben (6) an das Lichtsteuergerät (4) drahtlos, vorzugsweise mittels NFC oder Bluetooth oder Infrarot oder WLAN oder Certified Wireless USB oder über ein Mobilfunknetz, insbesondere über ein GSM Netz oder ein UMTS Netz oder ein LTE Netz oder ein LTE-Advanced Netz, oder kabelgebunden, vorzugsweise über ein USB-Kabel (10), überträgt.

6. Einstellsystem nach einem der Ansprüche 1 bis 5, **dadurch gekennzeichnet, dass** die Bedieneinheit (5) benutzerseitige Eingabemittel (11) aufweist und auf der Bedieneinheit (5) zumindest ein auf der Bedieneinheit (5) ausführbares Anwendungsprogramm (12), insbesondere eine Mobile App, gespeichert ist, welches Anwendungsprogramm (12) dazu eingerichtet ist, und den Parametersatz (2) zum modifizierten Parametersatz (8) gemäß der durch die benutzerseitigen Eingabemittel (11) erfolgenden Eingaben zu modifizieren.

7. Einstellsystem nach einem der Ansprüche 1 bis 6, **dadurch gekennzeichnet, dass** die Bedieneinheit (5) benutzerseitige Ausgabemittel (13) aufweist und auf der Bedieneinheit (5) zumindest ein auf der Bedieneinheit (5) ausführbares Anwendungsprogramm (12), insbesondere eine Mobile App, gespeichert ist, welches Anwendungsprogramm (12) dazu eingerichtet ist, die benutzerdefinierte Lichtverteilung (7) zu simulieren und dem Fahrzeugbenutzer über die Ausgabemittel (13) schematisch anzuzeigen.

8. Verfahren zum Betreiben zumindest eines Einstellsystems für eine Beleuchtungsvorrichtung für Fahrzeuge, welche Beleuchtungsvorrichtung (1) dazu eingerichtet ist, Licht zur Bildung zumindest einer durch einen Parametersatz (2) beschriebenen Lichtverteilung (3) in einen Bereich vor der Beleuchtungsvorrichtung (1) abzustrahlen, wobei das Einstellsystem zum Modifizieren der zumindest einen durch den Parametersatz (2) beschriebenen Lichtverteilung (3) eingerichtet ist, und wobei das Einstellsystem umfasst:
ein Lichtsteuergerät (4),
- in welchem Lichtsteuergerät (4) der die Lichtverteilung (3) beschreibende Parametersatz (2) gespeichert ist, und
- welches Lichtsteuergerät (4) der Beleuchtungsvorrichtung (1) zugeordnet ist und dazu eingerichtet ist, die Beleuchtungsvorrichtung (1) derart zu steuern, dass die Beleuchtungsvorrichtung (1) Licht zur Bildung der zumindest einen Lichtverteilung (3) gemäß dem Parametersatz (2) in einen Bereich vor der Beleuchtungsvorrichtung (1) abzustrahlen,
welches Verfahren folgende, vorzugsweise nacheinander ablaufende, Schritte aufweist:
i) Entgegennehmen benutzerseitiger Eingaben (6) mittels einer von der Beleuchtungsvorrichtung (1) und von dem Lichtsteuergerät (4) gesondert ausgebildeten und dem Lichtsteuergerät (4) zugeordneten Bedieneinheit (5),
ii) Modifizieren des Parametersatzes (2) zu einem weiteren zumindest eine weitere benutzerdefinierte Lichtverteilung (7) beschreibenden Parametersatz (8) gemäß der benutzerseitigen Eingaben (6), und
iii) Einstellen der Beleuchtungsvorrichtung (1), sodass die Beleuchtungsvorrichtung (1) Licht zur Bildung der benutzerdefinierten Lichtverteilung (7) gemäß dem modifizierten Parametersatz (8) in einen Bereich vor der Beleuchtungsvorrichtung (1) abstrahlt, **dadurch gekennzeichnet, dass**
- die Bedieneinheit einen ersten Teil (5a) und einen zweiten Teil (5b) aufweist, wobei der erste Teil (5a) als ein tragbares Endgerät ausgebildet ist und der zweite Teil (5b) als ein Fahrzeug-Bordcomputer ausgebildet ist,
- ein Anwendungsprogramm (12) auf der Bedieneinheit (5) ausgeführt wird, und
- Schritt ii) wie folgt ausgeführt wird:
-) Abrufen des Parametersatzes (2) von dem Lichtsteuergerät (4) mittels der Bedieneinheit (5),
-) Modifizieren des Parametersatzes (2) zu dem weiteren Parametersatz (8) gemäß der benutzerseitigen Eingaben (6) mittels
des Anwendungsprogramms (12), und
-) Überträgen des modifizierten Parametersatzes (8) an das Lichtsteuergerät (4) mittels der Bedieneinheit (5).

9. Verfahren nach Anspruch 8, **dadurch gekennzeichnet, dass** der Parametersatz (2) und der modifizierte Parametersatz (8) auf der Bedieneinheit (5) gespeichert werden.

10. Verfahren nach Anspruch 8 oder 9, **dadurch gekennzeichnet, dass** das Anwendungsprogramm (12) als eine mobile App ausgebildet ist.

11. Verfahren nach einem der Ansprüche 8 bis 10, **dadurch gekennzeichnet, dass** das Anwendungsprogramm (12) auf der Bedieneinheit (5) die Lichtverteilung (3) und / oder die benutzerdefinierte Lichtverteilung (7) simuliert oder simuliert und anzeigt.

12. Verfahren nach einem der Ansprüche 8 bis 11, **dadurch gekennzeichnet, dass** die Bedieneinheit (5) und das Lichtsteuergerät (4) drahtlos und / oder kabelgebunden kommunizieren.

13. Verfahren nach einem der Ansprüche 8 bis 12, **dadurch gekennzeichnet, dass** der erste Teil (5a) als ein Mobiltelefon, insbesondere ein Smartphone, ein Laptop, insbesondere ein Notebook, oder ein Tablet ausgebildet ist, und das Anwendungsprogramm (12) die Lichtverteilung (3) und / oder die benutzerdefinierte Lichtverteilung (7) auf dem ersten Teil (5a) simuliert und auf dem ersten Teil (5a) und / oder auf dem zweiten Teil (5b) anzeigt.

## Claims

1. An adjusting system for a lighting apparatus for vehicles, said lighting apparatus (1) being configured to emit light for forming at least one light distribution (3) described by a set of parameters (2) in a region in front of the lighting apparatus (1), wherein the adjusting system is configured to modify the at least one light distribution (3) described by a set of parameters (2) and wherein the adjusting system comprises:
a light control device (4),
- said light control device (4) storing the set of parameters (2) describing the light distribution (3), and
- said light control device (4) being allocated to the lighting apparatus (1) and being configured to control the lighting apparatus (1) in such a manner that the lighting apparatus (1) emits light for forming the at least one light distribution (3) described by the set of parameters (2) in a region in front of the lighting apparatus (1),
wherein a control unit (5) which is designed separately from the lighting apparatus (1) and the light control device (4) is allocated to the light control device (4),
said control unit (5) being configured
- to receive user inputs (6) and
- to transmit the user inputs (6) to the light control device (4),
wherein the light control device (4) is configured
- to modify the set of parameters (2) to arrive at another set of parameters (8) describing at least one other user-defined light distribution (7) according to the user inputs (6), and
- to adjust the lighting apparatus (1) in such a manner that the lighting apparatus (1) emits light for forming the at least one other light distribution (7) according to the other set of parameters (8) in a region in front of the lighting apparatus (1), **characterized in that** the control unit (5) additionally is configured
- to recall the set of parameters (2) from the light control device (4),
- to modify the set of parameters (2) to arrive at the other set of parameters (8) according to the user inputs (6), and
- to transmit the modified set of parameters (8) to the light control device (4), wherein
- the control unit (5) includes a first portion (5a) and a second portion (5b), wherein the first portion (5a) is designed as a portable terminal and the second portion (5b) is designed as a vehicle board computer.

2. The adjusting system according to Claim 1, **characterized in that** the light distribution (3) and/or the user-defined light distribution (7) is/are designed as a light distribution meeting the legal standards.

3. The adjusting system according to Claim 1 or 2, **characterized in that** the control unit (5) is configured to store the set of parameters (2) and the modified set of parameters (8).

4. The adjusting system according to any one of Claims 1 to 3, **characterized in that** the portable terminal is designed as a mobile phone, in particular a smart phone, or a laptop, in particular a notebook, or a tablet.

5. The adjusting system according to any one of Claims 1 to 4, **characterized in that** the control unit (5) transmits the user inputs (6) to the light control device (4) wirelessly, preferably via NFC or Bluetooth or infrared or WLAN or Certified Wireless USB, or via a mobile phone network, in particular a GSM network or a UMTS network or an LTE network or an LTE-Advanced network, or via a cable, preferably via a USB cable (10) .

6. The adjusting system according to any one of Claims 1 to 5, **characterized in that** the control unit (5) includes user input means (11) and that at least one application (12), in particular a mobile app, which can be executed on the control unit (5), is stored on the control unit (5), said application (12) being configured to modify the set of parameters (2) to arrive at the modified set of parameters (8) according to the inputs made via the user input means (11).

7. The adjusting system according to any one of Claims 1 to 6, **characterized in that** the control unit (5) includes user output means (13) and that at least one application (12), in particular a mobile app, which can be executed on the control unit (5), is stored on the control unit (5), said application (12) being configured to simulate the user-defined light distribution (7) and to display it schematically to the vehicle user via the output means (13).

8. A method for operating at least one adjusting system for a lighting apparatus for vehicles, said lighting apparatus (1) being configured to emit light for forming at least one light distribution (3) described by a set of parameters (2) in a region in front of the lighting apparatus (1), wherein the adjusting system is configured to modify the at least one light distribution (3) described by a set of parameters (2) and wherein the adjusting system comprises:
a light control device (4),
- said light control device (4) storing the set of parameters (2) describing the light distribution (3), and
- said light control device (4) being allocated to the lighting apparatus and being configured to control the lighting apparatus (1) in such a manner that the lighting apparatus (1) emits light for forming the at least one light distribution (3) according to the set of parameters (2) in a region in front of the lighting apparatus (1),
said method including the following, preferably sequentially executed, steps:
i) receiving user inputs (6) via a control unit (5) which is designed separately from the lighting apparatus (1) and the light control device (4) and which is allocated to the light control device (4),
ii) modifying the set of parameters (2) to arrive at another set of parameters (8) describing at least one other user-defined light distribution (7) according to the user inputs (6), and
iii) adjusting the lighting apparatus (1) in such a manner that the lighting apparatus (1) emits light for forming the user-defined light distribution (7) according to the modified set of parameters (8) in a region in front of the lighting apparatus (1), **characterized in that**
- the control unit includes a first portion (5a) and a second portion (5b), wherein the first portion (5a) is designed as a portable terminal and the second portion (5b) is designed as a vehicle board computer,
- an application (12) is executed on the control unit (5), and
- step ii) is executed as follows:
- recalling the set of parameters (2) from the light control device (4) via the control unit (5),
- modifying the set of parameters (2) to arrive at the other set of parameters (8) according to the user inputs (6) via the application (12), and
- transmitting the modified set of parameters (8) to the light control device (4) via the control unit (5).

9. The method according to Claim 8, **characterized in that** the set of parameters (2) and the modified set of parameters (8) are stored on the control unit (5).

10. The method according to Claim 8 or 9, **characterized in that** the application (12) is designed as a mobile app.

11. The method according to any one of Claims 8 to 10, **characterized in that** the application (12) simulates the light distribution (3) and/or the user-defined light distribution (7) on the control unit (5), or simulates and displays the same.

12. The method according to any one of Claims 8 to 11, **characterized in that** the control unit (5) and the light control device (4) communicate wirelessly and/or via a cable.

13. The method according to any one of Claims 8 to 12, **characterized in that** the first portion (5a) is designed as a mobile phone, in particular a smart phone, or a laptop, in particular a notebook, or a tablet, and that the application (12) simulates the light distribution (3) and/or the user-defined light distribution (7) on the first portion (5a) and displays the same on the first portion (5a) and/or on the second portion (5b).

## Revendications

1. Système de réglage pour un appareil d'éclairage pour véhicules, lequel appareil d'éclairage (1) est configuré pour émettre de la lumière pour la formation d'au moins une distribution de lumière (3) décrite par un ensemble de paramètres (2) dans une zone située devant l'appareil d'éclairage (1), dans lequel le système de réglage est configuré pour modifier ladite au moins une distribution de lumière (3) décrite par l'ensemble de paramètres (2), et dans lequel le système de réglage comporte :
un dispositif (4) de commande de lumière,
- dans lequel dispositif (4) de commande de lumière, l'ensemble de paramètres (2) décrivant la distribution de lumière (3) est mémorisé ; et
- lequel dispositif (4) de commande de lumière est attribué à l'appareil d'éclairage (1) et est configuré pour commander l'appareil d'éclairage (1) de telle sorte que l'appareil d'éclairage (1) émette de la lumière pour former ladite au moins une distribution de lumière (3) conformément à l'ensemble de paramètres (3) dans une zone située devant l'appareil d'éclairage (1),
une unité de commande (5) formée séparément de l'appareil d'éclairage (1) et du dispositif (4) de commande de lumière étant attribuée au dispositif (4) de commande de lumière,
laquelle unité de commande (5) est configurée pour
- accepter des entrées côté utilisateur (6) ; et
- transmettre les entrées côté utilisateur (6) au dispositif (4) de commande de lumière,
le dispositif (4) de commande de lumière étant configuré pour
- modifier l'ensemble de paramètres (2) conformément aux entrées côté utilisateur (6) pour produire un autre ensemble de paramètres (8) décrivant au moins une autre distribution de lumière (7) définie par l'utilisateur ; et
- régler l'appareil d'éclairage (1) de telle sorte que l'appareil d'éclairage (1) émette de la lumière pour former ladite au moins une autre distribution de lumière (7) conformément à l'autre ensemble de paramètres (8) dans une zone située devant l'appareil d'éclairage (1), **caractérisé par le fait que**
l'unité de commande (5) est en outre configurée pour
- appeler l'ensemble de paramètres (2) à partir dudit dispositif (4) de commande de lumière ;
- modifier l'ensemble de paramètres (2) conformément aux entrées côté utilisateur (6) pour former l'autre ensemble de paramètres (8) ; et
- transmettre l'ensemble de paramètres modifié (8) au dispositif (4) de commande de lumière ;
- l'unité de commande (5) présentant une première partie (5a) et une seconde partie (5b), la première partie (5a) étant formée en tant que terminal portable et la seconde partie (5b) étant formée en tant qu'ordinateur embarqué en véhicule.

2. Système de réglage selon la revendication 1, **caractérisé par le fait que** la distribution de lumière (3) et/ou la distribution de lumière (7) définie par l'utilisateur est/sont formée(s) en tant que distribution de lumière correspondant aux normes légales.

3. Système de réglage selon l'une des revendications 1 ou 2, **caractérisé par le fait que** l'unité de commande (5) est configurée pour mémoriser l'ensemble de paramètres (2) et l'ensemble de paramètres modifié (8).

4. Système de réglage selon l'une des revendications 1 à 3, **caractérisé par le fait que** le terminal portable est formé en tant que téléphone mobile, en particulier téléphone intelligent, ou en tant qu'ordinateur portable, en particulier ordinateur bloc-notes, ou en tant que tablette.

5. Système de réglage selon l'une des revendications 1 à 4, **caractérisé par le fait que** l'unité de commande (5) transmet les entrées côté utilisateur (6) au dispositif (4) de commande de lumière de manière sans fil, de préférence au moyen de NFC ou Bluetooth ou infrarouge ou WLAN ou USB sans fil certifié, ou par l'intermédiaire d'un réseau de communication mobile, en particulier par l'intermédiaire d'un réseau GSM ou d'un réseau UMTS ou d'un réseau LTE ou d'un réseau LTE-avancé, ou de manière filaire, en particulier par l'intermédiaire d'un câble USB (10).

6. Système de réglage selon l'une des revendications 1 à 5, **caractérisé par le fait que** l'unité de commande (5) présente des moyens d'entrée côté utilisateur (11) et, sur l'unité de commande (5), au moins un programme d'application (12) exécutable sur l'unité de commande (5), en particulier une application mobile, est mémorisé, lequel programme d'application (12) est configuré pour modifier l'ensemble de paramètres (2) pour former l'ensemble de paramètres modifié (8) conformément aux entrées s'effectuant par les moyens d'entrée côté utilisateur (11).

7. Système de réglage selon l'une des revendications 1 à 6, **caractérisé par le fait que** l'unité de commande (5) présente des moyens de sortie côté utilisateur (13) et, sur l'unité de commande (5), au moins un programme d'application (12) exécutable sur l'unité de commande (5), en particulier une application mobile, est mémorisé, lequel programme d'application (12) est configuré pour simuler la distribution de lumière (7) définie par l'utilisateur et pour l'afficher de façon schématique à l'utilisateur du véhicule par l'intermédiaire des moyens de sortie (13).

8. Procédé de fonctionnement d'au moins un système de réglage pour un appareil d'éclairage pour véhicules, lequel appareil d'éclairage (1) est configuré pour émettre de la lumière pour la formation d'au moins une distribution de lumière (3) décrite par un ensemble de paramètres (2) dans une zone située devant l'appareil d'éclairage (1), dans lequel le système de réglage est configuré pour modifier ladite au moins une distribution de lumière (3) décrite par l'ensemble de paramètres (2), et dans lequel le système de réglage comporte :
un dispositif (4) de commande de lumière,
- dans lequel dispositif (4) de commande de lumière, l'ensemble de paramètres (2) décrivant la distribution de lumière (3) est mémorisé ; et
- lequel dispositif (4) de commande de lumière est atribué à l'appareil d'éclairage (1) et est configuré pour commander l'appareil d'éclairage (1) de telle sorte que l'appareil d'éclairage (1) émette de la lumière pour former ladite au moins une distribution de lumière (3) conformément à l'ensemble de paramètres (2) dans une zone située devant l'appareil d'éclairage (1),
lequel procédé comporte les étapes suivantes, de préférence se déroulant successivement, consistant à :
(i) accepter des entrées côté utilisateur (6) au moyen d'une unité de commande (5) formée de façon séparée de l'appareil d'éclairage (1) et du dispositif (4) de commande de lumière et attribuée au dispositif (4) de commande de lumière ;
(ii) modifier l'ensemble de paramètres (2) conformément aux entrées côté utilisateur (6) pour produire un autre ensemble de paramètres (8) décrivant au moins une autre distribution de lumière (7) définie par l'utilisateur ; et
(iii) régler l'appareil d'éclairage (1) de telle sorte que l'appareil d'éclairage (1) émette de la lumière pour former la distribution de lumière (7) définie par l'utilisateur conformément à l'ensemble de paramètres modifié (8) dans une zone située devant l'appareil d'éclairage (1), **caractérisé par le fait que**
- l'unité de commande présente une première partie (5a) et une seconde partie (5b), la première partie (5a) étant formée en tant que terminal portable et la seconde partie (5b) étant formée en tant qu'ordinateur embarqué en véhicule ;
- un programme d'application (12) est exécuté sur l'unité de commande (5) ; et
- l'étape (ii) est réalisée comme suit :
-) appeler l'ensemble de paramètres (2) à partir de l'unité (4) de commande de lumière au moyen de l'unité de commande (5) ;
-) modifier l'ensemble de paramètres (2) conformément aux entrées côté utilisateur (6) pour former l'autre ensemble de paramètres (8) au moyen du programme d'application (12) ; et
-) transmettre l'ensemble de paramètres modifié (8) au dispositif (4) de commande de lumière au moyen de l'unité de commande (5).

9. Procédé selon la revendication 8, **caractérisé par le fait que** l'ensemble de paramètres (2) et l'ensemble de paramètres modifié (8) sont mémorisés sur l'unité de commande (5).

10. Procédé selon l'une des revendications 8 ou 9, **caractérisé par le fait que** le programme d'application (12) est formé en tant qu'application mobile.

11. Procédé selon l'une des revendications 8 à 10, **caractérisé par le fait que** le programme d'application (12) simule ou simule et affiche la distribution de lumière (3) et/ou la distribution de lumière (7) définie par l'utilisateur sur l'unité de commande (5).

12. Procédé selon l'une des revendications 8 à 11, **caractérisé par le fait que** l'unité de commande (5) et le dispositif (4) de commande de lumière communiquent de façon sans fil et/ou de façon filaire.

13. Procédé selon l'une des revendications 8 à 12, **caractérisé par le fait que** la première partie (5a) est formée en tant que téléphone mobile, en particulier téléphone intelligent, en tant qu'ordinateur portable, en particulier ordinateur bloc-notes, ou en tant que tablette, et le programme d'application (12) simule la distribution de lumière (3) et/ou la distribution de lumière (7) définie par l'utilisateur sur la première partie (5a) et affiche la distribution de lumière (3) et/ou la distribution de lumière (7) définie par l'utilisateur sur la première partie (5a) et/ou sur la seconde partie (5b).
